# EUROPÄISCHE PATENTSCHRIFT

(11) **EP 2 786 047 B1**
(45) Veröffentlichungstag und Bekanntmachung des Hinweises auf die Patenterteilung: **01.03.2017**
(21) Anmeldenummer: 12786906.3
(22) Anmeldetag: 05.11.2012
(51) Int. Cl.: F16H 59/10, F16H 61/18

(54) **BETÄTIGUNGSEINRICHTUNG FÜR EIN GETRIEBE EINES KRAFTFAHRZEUGS**
ACTIVATION APPARATUS FOR A TRANSMISSION OF A MOTOR VEHICLE
DISPOSITIF D'ACTIONNEMENT DE LA BOÎTE DE VITESSES D'UN VÉHICULE AUTOMOBILE

(30) Priorität: 28.11.2011 DE 102011087162
(43) Veröffentlichungstag der Anmeldung: 08.10.2014
(73) Patentinhaber: Bayerische Motoren Werke Aktiengesellschaft, 80809 München (DE)
(72) Erfinder: LINDNER, Matthias, 82166 Gräfelfing (DE); TILLE, Thomas, 81249 München (DE)
(86) Internationale Anmeldenummer: PCT/EP2012/071781
(87) Internationale Veröffentlichungsnummer: WO 2013/079274

(56) Entgegenhaltungen:
- DE-A1- 10 208 387
- DE-A1-102005 047 891
- JP-A- 2007 030 762
- JP-A- 2008 155 727

## Beschreibung

Die vorliegende Erfindung betrifft eine Betätigungseinrichtung für ein Getriebe eines Kraftfahrzeugs nach dem Oberbegriff des Anspruchs 1. Die Erfindung betrifft darüber hinaus auch ein Verfahren zur Betätigung einer Steuervorrichtung zum Sperren und Entsperren des Anwählens von Fahrprogrammen eines Getriebes nach dem Oberbegriff des Anspruchs 4.

Zur Betätigung von automatischen Fahrzeuggetrieben ist im Fahrzeuginnenraum von bekannten Fahrzeugen in der Regel eine Betätigungseinrichtung mit einem Gangwahlschalter vorgesehen, den der Fahrer zum Anwählen verschiedener Fahrprogramme, zur Vorwärtsfahrt, zur Rückwärtsfahrt und zur Auswahl einer Neutralstellung des Getriebes in einer Schaltgasse bewegen kann. Die Betätigung des Gangwahlschalters führt zu einem Steuerbefehl, der zu einer Getriebesteuervorrichtung übertragen wird. Zu den genannten Fahrprogrammen kommt zusätzlich eine Parksperrschaltung hinzu, die bei einigen Betätigungseinrichtungen ebenfalls mittels des Gangwahlschalters, und bei anderen Betätigungseinrichtungen mit einem eigens dafür vorgesehenen, beispielsweise am Gangwahlschalter oder benachbart dazu angeordneten Betätigungsknopf anwählbar ist. Wird die Parksperre betätigt, wird das Getriebe mechanisch verriegelt.

Um unbeabsichtigte Betätigungen des Gangwahlschalters und damit unbeabsichtigte Fahrprogrammwechsel zu vermeiden ist zudem eine Steuervorrichtung vorgesehen, die das Anwählen von Fahrprogrammen mittels des Gangwahlschalters sperrt. Um eine kontrollierte, beabsichtigte Betätigung des Gangwahlschalters zu ermöglichen ist ein Betätigungsknopf zum Entsperren des Anwählens der Fahrprogramme vorgesehen. Will der Fahrer ein Fahrprogramm anwählen, muss er den Betätigungsknopf gedrückt halten, während er den Gangwahlschalter betätigt.

Anhand der gattungsgemäßen DE 10208387 A1 ist ein Gerät zum elektrischen Steuern eines Getriebes eines Fahrzeugs bekannt geworden. Das bekannte Gerät weist einen Schalthebel auf, mit dem verschiedene Fahrprogramme ausgewählt werden können und ein Steuergerät, welches Eingangssignale eines Schaltungsfreigabeschalters auswertet, um zu entscheiden, ob eine Bedienung des Schalthebels gültig ist oder nicht und daraufhin ein im Getriebe befindlicher elektrischer Aktuator zur Ansteuerung des der Betätigung des Schalthebels entsprechenden Fahrprogramms betrieben wird. Der Schaltungsfreigabeschalter kann in der Form von am Lenkrad des Fahrzeugs verteilt angeordneter druckempfindlicher Sensoren ausgebildet sein, so dass das Steuergerät die Ansteuerung des Aktuators nur dann frei gibt, wenn die am Lenkrad angeordneten druckempfindlichen Sensoren mit einer Kraft höher als eine Schwellenwertkraft beaufschlagt werden und zusätzlich eine Betätigung des Schalthebels festgestellt wird.

Anhand der DE 102005047891 A1 sind ein Hybridantrieb und Betätigungsvorrichtung zur Durchführung eines Verfahrens zur Betätigung eines Getriebes eines Kraftfahrzeugs bekannt geworden. Nach dem bekannten Verfahren wird ein Fahrerwunsch hinsichtlich der Betätigung eines Wählhebels des Getriebes mittels optischer oder Berührungssensoren durch Erkennung der Annäherung an den oder Berührung des Wählhebels ermittelt. Bei dem hierzu eingesetzten Sensor kann es sich um einen Näherungssensor oder einen Berührungssensor handeln.

Anhand der JP 2007030762 A ist eine Betätigungsvorrichtung für ein Getriebe eines Fahrzeugs bekannt geworden, welche einen Schalthebel und eine Sensoreinheit aufweist, die getrennt vom Schalthebel angeordnet ist und einen Berührungssensor aufweist zur Erfassung, ob sich eine Hand des Fahrers an der Sensoreinheit angeordnet befindet, um eine Verriegelung des Schalthebels freizugeben oder aufrecht zu halten.

Anhand der JP 2008155727 A ist eine Betätigungseinrichtung für ein Getriebe bekannt geworden, die einen Schalthebel mit einem Schalter mit zwei Elektroden und ein Steuergerät aufweist. Das Steuergerät gibt eine Betätigung des Schalthebels zu einer-anderen Stellung hin frei, wenn ein vorbestimmter Fahrer-Stromwert an den Elektroden erkannt wird. Bei dieser bekannten Einrichtung wird also der Schalthebel in Abhängigkeit vom an den Elektroden erfassten Stromwert zu einer Betätigung in der Schaltgasse freigegeben.

Es ist eine auf die Anmelderin selbst zurückgehende Betätigungseinrichtung für ein Getriebe bekannt geworden, mit einem in einer Schaltgasse bewegbaren Gangwahlschalter zum Anwählen von Fahrprogrammen, und mit einer Steuervorrichtung, mit der das Anwählen der Fahrprogramme des Getriebes sperrbar ist. Am oberen Ende des Gangwahlschalters ist zudem ein Betätigungsknopf zum Aktivieren einer Parksperre vorgesehen. Das Anwählen von Fahrprogrammen mittels des Gangwahlschalters ist zunächst gesperrt, damit der Gangwahlschalter nicht unbeabsichtigt betätigt wird. Zum Entsperren des Anwählens von Fahrprogrammen ist ein seitlich am Gangwahlschalter angeordneter Betätigungsschalter vorgesehen, der mechanisch betätigt werden muss, damit sich der Gangwahlschalter in der Schaltgasse bewegen lässt. Um ein Fahrprogramm zu wählen, muss der Fahrer, während er den Gangwahlschalter in der Schaltgasse bewegt, den Betätigungsschalter ständig gedrückt halten, damit das Anwählen der Fahrprogramme entsperrt ist.

Obwohl sich die bekannte Betätigungseinrichtung zum Anwählen von Fahrprogrammen eines Getriebes in der Praxis bereits bestens bewährt hat, bestehen noch Verbesserungsmöglichkeiten. Damit der Fahrer ein Fahrprogramm anwählen kann, muss der seitlich am Gangwahlschalter angeordnete Betätigungsschalter während der gesamten Dauer, die der Fahrer zum Betätigen des Gangwahlschalters benötigt, mechanisch betätigt werden. Die Notwendigkeit, zum Anwählen von Fahrprogrammen einen mechanischen Schalter betätigen zu müssen, schränkt einerseits den Komfort ein, andererseits ist ein mechanischer Schalter immer mit einem Verschleiß behaftet. Ein mechanischer Schalter ist außerdem relativ teuer in der Produktion und benötigt viel Bauraum im Bereich des Gangwahlschalters.

Es ist daher Aufgabe der vorliegenden Erfindung, eine Betätigungseinrichtung für ein Getriebe eines Kraftfahrzeugs zu schaffen, mit der das Anwählen von Fahrprogrammen für den Fahrer komfortabler ist. Die Betätigungseinrichtung soll außerdem weniger verschleißanfällig und kostengünstiger an einem Fahrzeug verbaut werden können als eine bekannte Betätigungseinrichtung. Es soll zudem ein Verfahren zum Betätigen einer Steuervorrichtung zum Sperren und Entsperren des Anwählens wenigstens eines Fahrprogramms eines Getriebes geschaffen werden, welches ein für den Fahrer komfortableres Anwählen von Fahrprogrammen ermöglicht.

Die Erfindung löst diese Aufgabe hinsichtlich der Vorrichtung mit den Merkmalen nach dem Anspruch 1. Vorteilhafte Ausgestaltungen sind in den Ansprüchen 2 und 3 beschrieben. Die Erfindung löst die Aufgabe hinsichtlich des Verfahrens mit den Merkmalen nach dem Anspruch 4. Vorteilhafte Ausgestaltungen sind in weiteren Ansprüchen beschrieben.

Die Erfindung schafft eine Betätigungseinrichtung für ein Getriebe eines Kraftfahrzeugs, mit einem in wenigstens einer Schaltgasse bewegbaren Gangwahlschalter zum Anwählen verschiedener Fahrprogramme des Getriebes, mit einer Steuervorrichtung, mit der das Anwählen der Fahrprogramme des Getriebes sperrbar ist und mit wenigstens zwei zur Erfassung einer Gangwahlschalterbetätigung ausgebildeten Sensoren, wobei die Steuervorrichtung zur Plausibilisierung von Erfassungssignalen der Sensoren und zum Entsperren des Anwählens der Fahrprogramme in Abhängigkeit der Plausibilisierung ausgebildet ist und wenigstens einer der Sensoren am oder benachbart zum Gangwahlschalter angeordnet ist, wobei wenigstens einer der Sensoren ein kapazitiver Annäherungssensor und wenigstens einer der Sensoren ein optischer Sensor zur Erfassung einer Armbewegung des Fahrers ist.

Bei den mittels des Gangwahlschalters anwählbaren Fahrprogrammen handelt es sich in der Regel um ein Vorwärtsfahrprogramm, oft mit "D" bezeichnet, um eine Rückwärtsfahrstufe "R" und um eine Neutralstufe "N". Je nach Fahrzeugtyp kommt auch ein Sportfahrmodus "S" hinzu, und eventuell ein Fahrprogramm, in welchem der Fahrer beim Vorwärtsfahren manuell schalten kann, wobei er selbst entscheidet, wann eine neue Gangstufe eingelegt werden soll, und dann mittels einer Betätigung des Gangwahlschalters ein Signal auslöst, welches an ein Stellglied im Getriebe weitergeleitet wird, welches dann die entsprechende Übersetzung am Getriebe einstellt.

Das Sperren des Anwählens von Fahrprogrammen mittels der Steuervorrichtung dient hauptsächlich dazu, eine unbeabsichtigte Betätigung des Gangwahlschalters und damit ein unbeabsichtigtes Anwählen eines Fahrprogramms zu verhindern. Ein solches unbeabsichtigtes Anwählen könnte ohne die erfindungsgemäße Betätigungseinrichtung beispielsweise durch eine Betätigung des Gangwahlschalters durch den Beifahrer oder durch eine unbeabsichtigte Berührung des Gangwahlschalters durch den Fahrer ausgelöst werden. Ein solches unbeabsichtigtes Anwählen wird durch die erfindungsgemäße Betätigungseinrichtung verhindert.

Mit den wenigstens zwei Sensoren der Betätigungseinrichtung sind grundsätzlich verschiedene Formen der Betätigung des Gangwahlschalters erfassbar, also sowohl beabsichtigte, als auch unbeabsichtigte. Die Sensoren erzeugen, wenn der Gangwahlschalter betätigt wird, Erfassungssignale, welche an die Steuervorrichtung weitergeleitet werden. Die zur Erfassung der Gangwahlschalterbetätigung ausgebildeten Sensoren können beispielsweise am Gangwahlschalter, benachbart dazu, oder auch im Bereich der Schaltgasse des Fahrzeugs angeordnet sein.

Mittels der Steuervorrichtung werden die Erfassungssignale der Sensoren plausibilisiert, und es wird insbesondere zwischen plausiblen und unplausiblen Erfassungssignalen unterschieden. Unbeabsichtigte oder missbräuchliche Betätigungen des Gangwahlschalters führen zu als unplausibel qualifizierten Erfassungssignalen. Solche unplausiblen Erfassungssignale werden beispielsweise erzeugt, wenn der Fahrer den Gangwahlschalter unbeabsichtigt mit der Hand streift, weil er einen Betätigungsknopf benachbart zum Gangwahlschalter bedienen will, oder beispielsweise auch, wenn der Beifahrer den Gangwahlschalter zu betätigen versucht. Unter einer Betätigung, die zu plausiblen Erfassungssignalen führt, ist demgegenüber eine Betätigung zu verstehen, die vom Fahrer beabsichtigt ist, und welche zum Anwählen eines Fahrprogramm dienen soll.

Wenn das Ergebnis einer Plausibilisierung auf eine unbeabsichtigte Betätigung des Gangwahlschalters schließen lässt, bleibt das Anwählen von Fahrprogrammen weiterhin gesperrt. Wurden hingegen plausible Erfassungssignale erfasst, entsperrt die Steuervorrichtung das Anwählen des Fahrprogramms. Unter Anwählen ist dabei eine signalauslösende mechanische Betätigung des Gangwahlschalters zu verstehen. Wählt der Fahrer ein Fahrprogramm an, gibt die Steuervorrichtung ein entsprechendes Signal an ein Stellglied im Getriebe aus, welches dann im Getriebe eine dem angewählten Fahrprogramm entsprechende Stellung auslöst.

Anders als bei der bekannten Betätigungseinrichtung muss der Fahrer also während der Betätigung des Gangwahlschalters nicht ständig einen mechanischen Betätigungsknopf gedrückt halten, um das Anwählen von Fahrprogrammen zu entsperren. Dies ist für den Fahrer komfortabler. Ein mechanischer Knopf muss vom Fahrer immer zuerst ertastet, beziehungsweise gefunden werden, und danach betätigt werden, was Zeit in Anspruch nimmt. Das Entsperren des Anwählens von Fahrprogrammen läuft bei einer erfindungsgemäßen Betätigungseinrichtung daher schneller ab. Es kommt bei der erfindungsgemäßen Betätigungseinrichtung, anders als bei einem mechanischen Betätigungsknopf, auch nicht zu mechanischen Kontaktierungsproblemen des mechanischen Betätigungsknopfes. Zudem ist die erfindungsgemäße Betätigungseinrichtung weniger verschleißanfällig als die bekannte Betätigungseinrichtung, da ein mechanischer Schalter verklemmen oder brechen kann. Beim Einbau einer erfindungsgemäßen Betätigungseinrichtung in ein Fahrzeug muss zudem am Gangwahlschalter kein mechanischer Betätigungsschalter zum Entsperren des Anwählens von Fahrprogrammen verbaut werden. Die erfindungsgemäße Betätigungsvorrichtung ist daher auch platzsparender.

Nach der Erfindung ist wenigstens einer der Sensoren am oder benachbart zum Gangwahlschalter angeordnet. Am Gangwahlschalter oder benachbart dazu können auch mehrere Sensoren vorhanden sein, und auch eine Kombination von wenigstens einem am Gangwahlschalter angeordneten und einen benachbart dazu angeordnetem Sensor ist möglich.

Nach der Erfindung ist wenigstens einer der Sensoren ein kapazitiver Annäherungssensor. Ein solcher Annäherungssensor reagiert darauf, wenn der Fahrer sich dem Kontaktbereich des Sensors nähert beziehungsweise diesen berührt.

Ein solcher Sensor enthält beispielsweise einen Kondensator auf Siliziumbasis mit zwei integrierten Kondensatorplatten, deren Abstand zueinander veränderbar ist. Somit ist auch die Kapazität des Kondensators in Abhängigkeit einer Druckbeaufschlagung veränderbar. Dieser Sensor ist beispielsweise in einem Bereich am Gangwahlschalter vorgesehen, mit welchem ein Teil der Handfläche oder ein Finger des Fahrers in Berührung kommt, wenn er den Gangwahlschalter anfasst, um diesen zu betätigen. Wenn der Fahrer die betreffende Stelle am Gangwahlschalter berührt, gibt der Sensor ein Signal an die Steuervorrichtung aus.

Nach der Erfindung ist wenigstens einer der Sensoren ein optischer Sensor zur Erfassung einer Armbewegung des Fahrers. Der optische Sensor erfasst vorzugsweise, ob überhaupt eine
Bewegung des Armes des Fahrers stattfindet. Die Signale des optischen Sensors können dabei auch nur eine Momentaufnahme einer bestimmten Position im Rahmen einer vollständigen Armbewegung darstellen.

Erfindungsgemäß sind sowohl wenigstens ein optischer Sensor und wenigstens ein kapazitiver Annäherungssensor vorgesehen. Mit dem optischen Sensor lässt sich beispielsweise feststellen, dass der Fahrer den Arm zum Gangwahlschalter hinbewegt, und mit dem kapazitiven Sensor lässt sich anschließend feststellen, dass der Fahrer den Gangwahlschalter mit der Hand berührt. Die Kombination dieser sensorisch erfassten Aktionen des Fahrers lässt dann darauf schließen, dass der Fahrer den Gangwahlschalter beabsichtigt betätigt.

Vorzugsweise sind am Gangwahlschalter wenigstens zwei kapazitive Annäherungssensoren und ein optischer Sensor angeordnet. Auf diese Weise werden wenigstens drei Signale abgegeben, die Informationen darüber liefern, ob ein Fahrer den Gangwahlschalter beabsichtigt betätigt. Die Redundanz an Information erhöht die Signalgüte der von den Sensoren abgegebenen Signale. Wenn beispielsweise ein Mitfahrer den Gangwahlschalter in die Hand nimmt, geben zwar die beiden kapazitiven Annäherungssensoren ein entsprechendes Signal aus, der optische Sensor erkennt aber, dass sich nicht der Arm des Fahrers zum Gangwahlschalter hinbewegt hat. In diesem Fall würde das Anwählen von Fahrprogrammen nicht entsperrt, um die missbräuchliche Betätigung des Gangwahlschalters zu verhindern.

Gemäß einer Weiterbildung der Erfindung ist die Steuervorrichtung zur Entsperrung des Anwählens der Fahrprogramme in Abhängigkeit eines vorgegebenen Signalmusters ausgebildet. Das Signalmuster dient dazu, zwischen unbeabsichtigten, missbräuchlichen Betätigungen des Gangwahlschalters und den damit einhergehenden unplausiblen Erfassungssignalen, und beabsichtigten Betätigungen und den damit einhergehenden plausiblen Erfassungssignalen zu unterscheiden. Wenn die Erfassungssignale der Sensoren dem Signalmuster entsprechen, werden sie als plausible Erfassungssignale angesehen.

Ein vorgegebenes Signalmuster beinhaltet beispielsweise, dass alle Sensoren in einer bestimmten Reihenfolge oder alle gleichzeitig ein Erfassungssignal ausgeben. Das Signalmuster kann aber beispielsweise auch beinhalten, dass einige vorbestimmte Sensoren ein Signal ausgeben, während andere Sensoren kein Signal ausgeben. Letzteres ist beispielsweise dann sinnvoll, wenn wenigstens ein Sensor vorgesehen ist, bei dem die Tatsache, dass er ein Signal ausgibt, darauf hindeutet, dass eine missbräuchliche Betätigung des Gangwahlschalters vorliegt.

Die erfindungsgemäße Betätigungseinrichtung weist außerdem vorzugsweise eine am Gangwahlschalter oder benachbart dazu angeordnete Betätigungsvorrichtung zum Aktivieren und/oder Deaktivieren einer Parksperre auf. Die Betätigungsvorrichtung ist in der Regel ein am Gangwahlschalter oder benachbart dazu angeordneter Betätigungsknopf.

Auch ein Verfahren zur Betätigung einer Steuervorrichtung zum Sperren und Entsperren des Anwählens von Fahrprogrammen eines Getriebes eines Kraftfahrzeugs ist Gegenstand der Erfindung. Es wird dabei vorgeschlagen, dass die Betätigung eines Gangwahlschalters mittels wenigstens zweier Sensoren erfasst wird, von denen wenigstens einer an oder benachbart zu dem Gangwahlschalter angeordnet ist und die Erfassungssignale der Sensoren plausibilisiert werden und das Anwählen der Fahrprogramme in Abhängigkeit der Plausibilisierung entsperrt wird, wobei als Erfassungssignal ein die Ausübung von Druck auf den Gangwahlschalter mittels der Hand des Fahrers des Kraftfahrzeugs erfassendes Signal und ein die Annäherung des
Arms des Fahrers des Kraftfahrzeugs an den Gangwahlschalter erfassendes Signal verwendet wird. Die Plausibilisierung erfolgt wie vorstehend in Zusammenhang mit der erfindungsgemäßen Betätigungseinrichtung beschrieben.

Gemäß einer Weiterbildung des erfindungsgemäßen Verfahrens wird das Anwählen der Fahrprogramme entsperrt, wenn die Erfassungssignale der Sensoren einem vorgegebenen Signalmuster entsprechen.

Das Anwählen der Fahrprogramme wird gemäß einer bevorzugten Ausführungsform des Verfahrens zum Beispiel dann entsperrt, wenn das Erfassungssignal wenigstens eines vorbestimmten Sensors einem vorgegebenen Schwellenwert überschreitet oder wenn das Erfassungssignal wenigstens eines vorbestimmten Sensors einem vorgegebenen Schwellenwert unterschreitet.

Dabei können auch für verschiedene Sensoren unterschiedliche Schwellenwerte vorgegeben sein. So kann die Voraussetzung für das Entsperren des Anwählens von Fahrprogrammen beispielsweise beinhalten, dass das Signal eines ersten Sensors einen vorgegebenen ersten Schwellenwert überschreitet, das Signal eines zweiten Sensors einen vorgegebenen zweiten Schwellenwert unterschreitet, und ein dritter Sensor währenddessen kein Erfassungssignal ausgibt. Auf diese Weise kann sehr genau zwischen beabsichtigten und unbeabsichtigten Betätigungen des Gangwahlschalters unterschieden werden.

Nach einer bevorzugten Ausführungsform des erfindungsgemäßen Verfahrens wird das Anwählen der Fahrprogramme zum Beispiel entsperrt, wenn das Erfassungssignal wenigstens eines Sensors während einer vorgegebenen Zeitdauer einen vorbestimmten Schwellenwert überschreitet oder unterschreitet. Auf diese Weise wird vermieden, dass ein sogenanntes Hintergrundrauschen der Sensoren, mit anderen Worten eine fehlerhafte Ausgabe von Signalen, dazu führt, dass das Anwählen von Fahrprogrammen bei einer missbräuchlichen Betätigung des Gangwahlschalters entsperrt wird. Für eine Betätigung wird deshalb beispielsweise gefordert, dass zwei am Gangwahlschalter angeordnete kapazitive Sensoren mindestens während 200 Millisekunden ein Erfassungssignal abgeben, und dass der optische Sensor mindestens während 300 Millisekunden ein entsprechendes Signal ausgibt, welches anzeigt, dass der Fahrer den Arm auf den Gangwahlschalter zubewegt.

Es sind außerdem nach der Erfindung auch Ausführungsformen des Verfahrens vorgesehen, bei denen das Anwählen von Fahrprogrammen entsperrt wird, wenn wenigstens ein vorbestimmter Sensor während einer vorgegebenen Zeitdauer kein Erfassungssignal ausgibt. In diesem Fall würde ein Erfassungssignal des vorbestimmten Sensors beispielsweise auf eine missbräuchliche Benutzung des Gangwahlschalters hinweisen.

Nach dem Verfahren lassen sich auch mehrere der vorstehend beschriebenen Voraussetzungen dafür, dass das Anwählen von Fahrprogrammen entsperrt wird, kombinieren. Das Anwählen von Fahrprogrammen wird also zum Beispiel dann entsperrt, wenn ein erster Sensor während einer vorbestimmten Zeitdauer ein Erfassungssignal abgibt, dessen Stärke einen vorgegebenen ersten Schwellenwert überschreitet, und gleichzeitig ein zweiter Sensor während einer vorbestimmten Zeitdauer kein Erfassungssignal abgegeben hat, welches einen vorgegebenen zweiten Schwellenwert überschreitet.

Die Erfindung wird nachstehend anhand der beigefügten Zeichnungen beispielhaft näher erläutert. Es zeigen:
- Fig. 1: eine perspektivische Darstellung einer Ausführungsform einer erfindungsgemäßen Betätigungseinrichtung; und
- Fig. 2: ein Blockschaltbild einer Ausführungsform einer erfindungsgemäßen Betätigungseinrichtung.

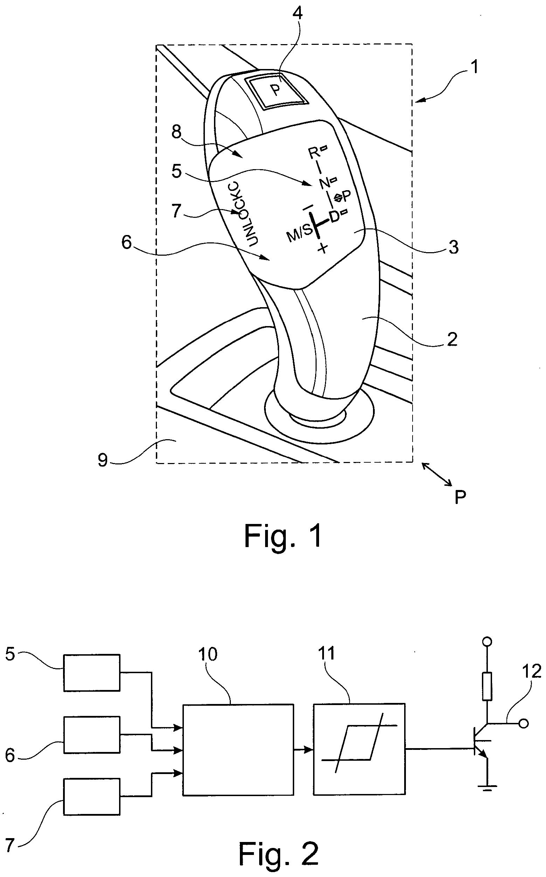

Fig. 1 zeigt eine perspektivische Darstellung einer Ausführungsform einer erfindungsgemäßen Betätigungseinrichtung 1 für ein nicht näher dargestelltes Getriebe eines Kraftfahrzeugs. Die Betätigungseinrichtung 1 weist einen in einer Schaltgasse bewegbaren Gangwahlschalter 2 zum Anwählen verschiedener Fahrprogramme auf. Die Bewegungsrichtungen des Gangwahlschalters 2 innerhalb der Schaltgasse sind mit dem Doppelpfeil P angedeutet.

Die Fahrprogramme sind bei dieser Ausführungsform des Gangwahlschalters 2 auf einem für den Fahrer gut erkennbaren optischen Display mittels entsprechenden Buchstaben wie zum Beispiel "D" dargestellt. Bei der dargestellten Ausführungsform des Gangwahlschalters 2 sind eine Rückwärtsfahrstufe "R", eine Neutralstufe "N" und ein Vorwärtsfahrprogramm "D" vorhanden, die über Bewegungen des Gangwahlschalters 2 in der Schaltgasse anwählbar sind. Das aktuell angewählte Fahrprogramm wird dem Fahrer auf dem optischen Display 3 angezeigt, indem jeweils ein unterhalb des zum angewählten Fahrprogramm zugehörigen Buchstabens angeordnetes Lichtelement aktiviert wird.

Am Gangwahlschalter 2 ist zudem ein Betätigungsknopf 4 zum Aktivieren einer Parksperre vorgesehen. Drückt der Fahrer den Betätigungsknopf 4 bei stillstehendem Fahrzeug, wird die Parksperre aktiviert, und bei anschließenden, erneuten plausibilisierten Bedienen des Gangwahlschalters 2 kann sie wieder ausgelegt werden.

Bei der dargestellten Ausführungsform der Betätigungseinrichtung 1 ist zudem, durch eine Betätigung eines benachbart zum Gangwahlschalter 2 angeordneten Betätigungsschalters 9, auch noch ein weiteres Fahrprogramm anwählbar. Durch erneutes Betätigen des Betätigungsschalters 9 wird dieses Fahrprogramm wieder verlassen und in den Normalfahrmodus zurückgekehrt. Schließlich ist durch Ausführen einer zur Pfeilrichtung P orthogonalen Bewegung mittels des Gangwahlschalters 2, in der Figurenebene nach links, wenn das Vorwärtsfahrprogramm angewählt ist, auch noch ein manuelles Schaltprogramm einstellbar. Durch ein erneutes Ausführen dieser Bewegung wird dieses manuelle Schaltprogramm wieder verlassen. Ist das manuelle Schaltprogramm aktiviert, kann der Fahrer durch leichtes Antippen des Gangwahlschalters 2 in Pfeilrichtung P, zwischen Gangstufen des Getriebes umschalten. Drückt der Fahrer beispielsweise den Gangwahlschalter nach vorne, wird ein Signal an ein Stellglied im Getriebe abgegeben, welches eine Gangstufe hochschaltet.

Das Auswählen der Fahrprogramme wird zunächst von einer in Fig. 2 dargestellten Steuervorrichtung 10 gesperrt, um eine versehentliche, missbräuchliche Betätigung des Gangwahlschalters 2 zu vermeiden.

Damit zwischen einer beabsichtigten Betätigung des Gangwahlschalters 2 durch den Fahrer, und einer unbeabsichtigten oder missbräuchlichen Betätigung unterschieden werden kann, sind am Gangwahlschalter 2 Sensoren 5, 6, 7 zur Erfassung einer Betätigung des Gangwahlschalters 2 vorgesehen. Die Erfassungssignale der Sensoren 5, 6, 7 werden von der in Fig. 2 dargestellten Steuervorrichtung 10 plausibilisiert, und nur wenn die Erfassungssignale einem vorgegebenen Signalmuster entsprechen, wird das Erfassungssignal als plausibel angesehen, was auf eine beabsichtigte Gangwahlschalterbetätigung hindeutet.

Die Sensoren 5, 6 und 7 sind im Bereich einer Kontaktfläche 8 des Schalthebels angeordnet, welche bei der dargestellten Ausführungsform mit einem Schriftzug "Unlock" versehen ist, um dem Fahrer zu signalisieren, dass er die betreffende Kontaktfläche 8 mit der Hand berühren muss, damit er den Gangwahlschalter 2 betätigen kann. Zwei der Sensoren, 5 und 6, sind kapazitive Annäherungssensoren. Diese geben ein Erfassungssignal an die Steuervorrichtung aus, wenn der Fahrer mit seiner Hand auf die betreffenden Stellen, an denen die Sensoren 5, 6 angeordnet sind, Druck ausübt.

Der Sensor 7 ist als optischer Näherungssensor ausgebildet. Dieser erfasst, ob sich der Arm des Fahrers dem Gangwahlschalter 2 nähert. Dieser optische Näherungssensor 7 gibt dabei ein entsprechendes Signal an die Steuervorrichtung aus, wenn eine Bewegung des Arms des Fahrers erfasst wurde.
Wenn der optische Näherungssensor 7 eine Annäherung des Arms des Fahrers an den Gangwahlschalter 2 signalisiert, und die beiden kapazitiven Drucksensoren 5, 6 anzeigen, dass Druck auf die betreffenden Stellen der Kontaktfläche 8 ausgeübt wird, entsperrt die Steuervorrichtung 10 das Anwählen von Fahrprogrammen.

Fig. 2 zeigt ein Blockschaltbild der in Fig. 1 perspektivisch dargestellten erfindungsgemäßen Betätigungseinrichtung 1. Bei der dargestellten Ausführungsform werden mittels insgesamt dreier Sensoren, den beiden kapazitiven Drucksensoren 5, 6 und dem optischen Näherungssensor 7 Signale an eine Steuervorrichtung 10 ausgegeben.

Die Steuervorrichtung 10 wertet die Erfassungssignale der Sensoren 5, 6, 7 aus, und ermittelt, ob sie einem vorgegebenen Signalmuster entsprechen. Auf Basis ihrer Verarbeitung gibt sie ein Ausgangssignal an einen Schwellenwertschalter 11 aus. Bei der dargestellten Ausführungsform handelt es sich beim Schwellenwertschalter 11 um einen Schmitt-Trigger. Dieser gibt eine minimale Ausgangsspannung an eine Ausgangsstufe 12 aus, wenn das Eingangssignal von der Steuervorrichtung 10 einen vorgegebenen Schwellenwert unterschreitet. Sobald das Eingangssignal aber den vorgegebenen Schwellenwert während einer vorbestimmten Zeitdauer überschreitet, gibt der Schwellenwertschalter 10 eine maximale Ausgangsspannung aus. Wenn die maximale Ausgangsspannung an die Ausgangsstufe 12 weitergeleitet wird, entsperrt die Ausgangsstufe das Anwählen von Fahrprogrammen mittels des in Fig. 1 dargestellten Gangwahlschalters 2. Solange die Ausgangsspannung des Schwellenwertschalters 10 maximal ist, bleibt das Anwählen von Fahrprogrammen entsperrt. Sobald die Ausgangsspannung des Schwellenwertschalters 10 wieder auf das Minimum zurückfällt, wird das Anwählen von Fahrprogrammen wieder gesperrt.

Hinsichtlich vorstehend im Einzelnen nicht näher erläuterter Merkmale der Erfindung wird im Übrigen ausdrücklich auf die Patentansprüche und die Zeichnungen verwiesen.

### Bezugszeichenliste

- 1: Betätigungseinrichtung
- 2: Gangwahlschalter
- 3: Display für Fahrprogramme
- 4: Betätigungsknopf
- 5: kapazitiver Annäherungssensor
- 6: kapazitiver Annäherungssensor
- 7: optischer Näherungssensor
- 8: Kontaktfläche
- 9: Betätigungsschalter
- 10: Steuervorrichtung
- 11: Schwellenwertschalter
- 12: Ausgangsstufe

- P: Doppelpfeil

## Patentansprüche

1. Betätigungseinrichtung für ein Getriebe eines Kraftfahrzeugs, mit einem in wenigstens einer Schaltgasse bewegbaren Gangwahlschalter (2) zum Anwählen verschiedener Fahrprogramme des Getriebes, mit einer Steuervorrichtung (10), mit der das Anwählen der Fahrprogramme des Getriebes sperrbar ist und mit wenigstens zwei zur Erfassung einer Gangwahlschalterbetätigung ausgebildeten Sensoren (5, 6, 7), wobei die Steuervorrichtung (10) zur Plausibilisierung von Erfassungssignalen der Sensoren (5, 6, 7) und zum Entsperren des Anwählens der Fahrprogramme in Abhängigkeit der Plausibilisierung ausgebildet ist und wenigstens einer der Sensoren (5, 6, 7) am oder benachbart zum Gangwahlschalter (2) angeordnet ist, **dadurch gekennzeichnet, dass** wenigstens einer der Sensoren (5, 6, 7) ein kapazitiver Annäherungssensor (5, 6) und wenigstens einer der Sensoren (5, 6, 7) ein optischer Sensor (7) zur Erfassung einer Armbewegung des Fahrers ist.

2. Betätigungseinrichtung nach Anspruch 1, **dadurch gekennzeichnet, dass** die Steuervorrichtung (10) zur Entsperrung des Anwählens der Fahrprogramme in Abhängigkeit eines vorgegebenen Signalmusters ausgebildet ist.

3. Betätigungseinrichtung nach Anspruch 1 oder 2, **gekennzeichnet durch** eine am Gangwahlschalter (2) oder benachbart dazu angeordnete Betätigungsvorrichtung (4) zum Aktivieren und/oder Deaktivieren einer Parksperre.

4. Verfahren zur Betätigung einer Steuervorrichtung (10) zum Sperren und Entsperren des Anwählens von Fahrprogrammen eines Getriebes eines Kraftfahrzeugs, wobei nach dem Verfahren die Betätigung eines Gangwahlschalters (2) mittels wenigstens zweier Sensoren (5, 6, 7) erfasst wird, von denen wenigstens einer an oder benachbart zu dem Gangwahlschalter (2) angeordnet ist und die Erfassungssignale der Sensoren (5, 6, 7) plausibilisiert werden und das Anwählen der Fahrprogramme in Abhängigkeit der Plausibilisierung entsperrt wird, **dadurch gekennzeichnet, dass** als Erfassungssignal ein die Ausübung von Druck auf den Gangwahlschalter mittels der Hand des Fahrers des Kraftfahrzeugs erfassendes Signal und ein die Annäherung des Arms des Fahrers des Kraftfahrzeugs an den Gangwahlschalter erfassendes Signal verwendet wird.

5. Verfahren nach Anspruch 4, **dadurch gekennzeichnet, dass** das Anwählen der Fahrprogramme entsperrt wird, wenn die Erfassungssignale der Sensoren (5, 6, 7) einem vorgegebenen Signalmuster entsprechen.

6. Verfahren nach Anspruch 4 oder 5, **dadurch gekennzeichnet, dass** das Anwählen der Fahrprogramme entsperrt wird, wenn das Erfassungssignal wenigstens eines vorbestimmten Sensors (5, 6, 7) einen vorgegebenen Schwellenwert überschreitet oder unterschreitet.

7. Verfahren nach einem der Ansprüche 4 bis 6, **dadurch gekennzeichnet, dass** das Anwählen der Fahrprogramme entsperrt wird, wenn das Erfassungssignal wenigstens eines Sensors (5, 6, 7) während einer vorgegebenen Zeitdauer einen vorbestimmten Schwellenwert überschreitet oder unterschreitet.

## Claims

1. An actuation device for a transmission of a motor vehicle, having a gear selector (2), movable in at least one shift gate, for selecting different drive programs of the transmission, having a control device (10) which can lock the selection of the drive programs of the transmission and having at least two sensors (5, 6, 7) which are configured to detect a gear selector actuation, wherein the control device (10) is configured to determine a plausibility of detection signals of the sensors (5, 6, 7) and to unlock the selection of the drive programs subject to the plausibility and at least one of the sensors (5, 6, 7) is arranged on or adjacent to the gear selector (2), **characterised in that** at least one of the sensors (5, 6, 7) is a capacitive proximity sensor (5, 6) and at least one of the sensors (5, 6, 7) is an optical sensor (7) for detecting an arm movement by the driver.

2. An actuation device according to claim 1, **characterised in that** the control device (10) is configured to unlock the selection of the drive programs subject to a predetermined signal pattern.

3. An actuation device according to claim 1 or claim 2, **characterised by** an activation device (4) which is arranged on the gear selector (2) or adjacent thereto, for activating and/or deactivating a parking lock.

4. A method for actuating a control device (10) for locking and unlocking the selection of drive programs of a transmission of a motor vehicle, wherein according to the method, the actuation of a gear selector (2) is detected by at least two sensors (5, 6, 7), at least one of which is arranged on or adjacent to the gear selector (2), and the detection signals of the sensors (5, 6, 7) are checked for plausibility and the selection of the drive programs is unblocked subject to the plausibility, **characterised in that** a signal which detects the exertion of pressure on the gear selector by the hand of the driver of the motor vehicle and a signal which detects the approach of the arm of the driver of the motor vehicle to the gear selector is used as the detection signal.

5. A method according to claim 4, **characterised in that** the selection of the drive programs is unlocked if the detection signals of the sensors (5, 6, 7) correspond to a predetermined signal pattern.

6. A method according to claim 4 or claim 5, **characterised in that** the selection of the drive programs is unlocked if the detection signal of at least one predetermined sensor (5, 6, 7) exceeds or falls below a predetermined threshold value.

7. A method according to any one of claims 4 to 6, **characterised in that** the selection of the drive programs is unlocked if the detection signal of at least one sensor (5, 6, 7) exceeds or falls below a predetermined threshold value during a predetermined period of time.

## Revendications

1. Dispositif d'actionnement de la boîte de vitesses d'un véhicule automobile comprenant un commutateur-sélecteur de vitesse (2) mobile dans au moins une voie de commutation de façon à permettre la sélection de différents programmes de conduite de la boîte de vitesses, ainsi qu'un dispositif de commande (10) par lequel la sélection des programmes de conduite de la boîte de vitesses peut être bloquée et au moins deux capteurs (5, 6, 7) réalisés pour permettre de détecter un actionnement du commutateur sélecteur de vitesse, le dispositif de commande (10) étant réalisé pour permettre de vérifier la plausibilité des signaux de détection des capteurs (5, 6, 7) et pour débloquer la sélection des programmes de conduite en fonction de la vérification de la plausibilité, et, au moins l'un des capteurs (5, 6, 7) étant situé sur ou à proximité du commutateur-sélecteur de vitesse (2),
**caractérisé en ce que**
au moins l'un des capteurs (5, 6, 7) est un capteur de proximité capacitif (5, 6) et au moins l'un des capteurs (5, 6, 7) est un capteur optique (7) pour permettre de détecter un mouvement du bras du conducteur.

2. Dispositif d'actionnement conforme à la revendication 1,
**caractérisé en ce que**
le dispositif de commande (10) est réalisé pour permettre un déblocage de la sélection des programmes de conduite en fonction d'un modèle de signaux prédéfini.

3. Dispositif d'actionnement conforme à la revendication 1 ou 2,
**caractérisé par**
un organe d'actionnement (4) situé sur le commutateur-sélecteur de vitesse (2) ou à proximité de celui-ci pour permettre d'activer et/ou de désactiver un frein de stationnement.

4. Procédé d'actionnement d'un dispositif de commande (10) pour permettre de bloquer et de débloquer la sélection de programmes de conduite de la boîte de vitesses d'un véhicule automobile, selon lequel l'actionnement d'un commutateur-sélecteur de vitesse (2) est détecté au moyen d'au moins deux capteurs (5, 6, 7) dont au moins un est situé sur ou à proximité du commutateur-sélecteur de vitesse (2), les signaux de détection des capteurs (5, 6, 7) sont contrôlés pour vérifier leur plausibilité, et la sélection des programmes de conduite est débloquée en fonction de la vérification de la plausibilité,
**caractérisé en ce que**
en tant que signal de détection, on utilise un signal détectant l'application d'un pression sur le commutateur-sélecteur de vitesse au moyen de la main du conducteur du véhicule, et un signal détectant l'approche de la main du conducteur du véhicule du commutateur sélecteur de vitesse.

5. Procédé conforme à la revendication 4,
**caractérisé en ce que**
la sélection des programmes de conduite est débloquée lorsque les signaux de détection des capteurs (5, 6, 7) correspondent à un modèle de signaux prédéfini.

6. Procédé conforme à la revendication 4 ou 5,
**caractérisé en ce que**
la sélection des programmes de conduite est débloquée lorsque le signal de détection d'au moins l'un des capteurs (5, 6, 7) prédéfini devient supérieur ou inférieur à une valeur de seuil prédéfinie.

7. Procédé conforme à l'une des revendications 4 à 6,
**caractérisé en ce que**
la sélection des programmes de conduite est débloquée lorsque le signal de détection d'au moins l'un des capteurs (5, 6, 7) devient supérieur ou inférieur à une valeur de seuil prédéfinie pendant une durée prédéfinie.
